**Europäisches Patentamt**

**European Patent Office**

**Office européen des brevets**

(19)

(11) Publication number: **0 183 470**

**A1**

(12) **EUROPEAN PATENT APPLICATION**

(21) Application number: **85308411.9**

(22) Date of filing: **19.11.85**

(51) Int. Cl.⁴: **C 25 C 7/00**
**H 01 M 10/42, C 25 D 17/00**

(30) Priority: **19.11.84 FI 844529**

(43) Date of publication of application:
**04.06.86 Bulletin 86/23**

(84) Designated Contracting States:
**AT BE CH DE FR GB IT LI LU NL SE**

(71) Applicant: **LTH ASSOCIATES**
**100 Memorial Drive**
**Cambridge Massachusetts(US)**

(72) Inventor: **Tamminen, Pentti Juuse**
**Lth Associates Ltd. Partnership Lastatie 2**
**SF-00660 Helsinki(FI)**

(74) Representative: **Baillie, Iain Cameron et al,**
**c/o Ladas & Parry Isartorplatz 5**
**D-8000 München 2(DE)**

(54) **Process and apparatus for separating metals from solutions.**

(57) A process for depositing a metal from a solution containing said metal onto a metal-collecting face of a cathode electrode (26) said cathode electrode and an anode electrode, mounted with a face substantially parallel to said cathode electrode face, forming part of an electrochemical cell, comprising the steps of:

providing said solution to said cell at least in the area (45) thereof between said electrodes;

applying a substantial centrifugal force to said metal-collecting face, said force having a substantial component in a direction perpendicular to and outward from the face; and

applying an electric current to said electrodes.

FIG. 1

EP 0 183 470 A1

0183470

## PROCESS AND APPARATUS FOR SEPARATING METALS FROM SOLUTIONS

This invention relates to a method and apparatus for separating and depositing metals from a solution containing ions of such metal and more particularly to a metal separation method and apparatus utilizing centrifugal force to control the metal deposition and suitable for use with a rechargeable battery.

## BACKGROUND OF THE INVENTION

There are many applications where a metal is dissolved in a solution during an industrial process and it is desired either for reclaimation or other purposes to separate the metal from the solution. Examples of such applications include the electrowinning of metals from solutions in which such metals have become deposited during various industrial processes and the redepositing of metal from the electrolyte of a battery during the charging of the battery.

A problem in the deposition of metals from a solution in an electrochemical cell is that the dendritic or mossy growth of the metal layer results in a porous and uneven deposit which can span the interelectrode gap and short circuit the cell if the cell is either run for any substantial period of time or after a relatively short number of charge—discharge cycles of a storage battery. Good results in overcoming this problem and in achieving dense and homogeneous deposits have been acheived by utilizing various techniques to increase the relative movement between the negative electrodes and the electrolyte and/or to increase the mass of metal from the electrolyte solution in the immediate area

CASE: 844,529

of the negative electrode. These objectives have been obtained in for example U.S. Patent No. 3,783,110, issued January 1, 1974 to

I. Ahmad and entitled "Process for Electrodeposition of Metals Under the Influence of a Centrifugal Force Field", by creating a very high centrifugal force which is directed towards and substantially perpendicular to the metal-collecting face of the negative electrode. U.S Patent No. 3,591,466, issued July 6, 1971 to S. Heiman and entitled "Composite Structure Production",

utilizes a similar technique to produce composite materials and U.S Patent No. 4,521,497, issued June 4, 1985 to P. Tamminen and entitled "Electrochemical Generators and Method for the Operation Thereof", utilizes a high centrifugal force applied to the metal-

collecting face of the negative electrode during charging of an electrochemical generator to retard dendrite growth. While the techniques indicated above are suitable if all that is required is a homogeneous and dense metal deposit, they are not readily adapted to the continuous electrowinning of metal from a solution.


## SUMMARY OF THE INVENTION

In accordance with this invention, it has been discovered that new and unexpected results which, among other things, permit the continuous electrowinning of metal from a solution, can be achieved by having a powerful centrifugal force applied to the metal-collecting face of the negative electrode of an electrochemical cell which force has a substantial component perpendicular to such face and in a direction away from the face.

Thus, this invention utilizes a centrifugal force during an

2

electrowinning process which force is directed in the opposite direction from the direction in which such force has been directed in all known prior art applications.

More particularly, this invention relates to a process for depositing metal from an electrolyte solution which contains ions of the metal. The first step in this process is to mount at least one cathode electrode having a metal collecting face and at least one anode electrode having an inner face in a rotatable cell. The electrodes are mounted (a) with their faces substantially parallel to each other and spaced from each other by a predetermined distance, (b) oriented in the cell relative to the axis of rotation of the cell such that when the cell is rotated, the resulting centrifugal force appplied to the electrode faces has a substantial component in a direction perpendicular to said faces and (c) with the cathode electrode closer to the axis of rotation of the cell than the anode electrode so that the perpendicular component of the centrifugal force applied to the metal collecting face of the cathode electrode is in a direction away from said face. The electrolyte solution is provided to the cell in at least the space between the electrodes. The cell, and thus the electrodes and the electrolyte solution therein, is rotated about the cell's axis of rotation to generate the centrifugal force and an electric current is applied to the electrodes, resulting in the deposition of the metal on the metal-collecting face of the cathode electrode in the form of nodules of substantially uniform size and shape.

## BRIEF DESCRIPTION OF DRAWINGS

Fig. 1 is a schematic cross-sectional view of apparatus which may be used in accordance with the teaching of the invention to separate metal from a solution.

Fig. 2 is an enlarged view of a portion of the electrodes of the apparatus shown in Fig. 1 illustrating the manner in which the metal is deposited.

Fig. 3 is a schematic cross-sectional view of a portion of an alternative embodiment of apparatus suitable for practicing the teachings of this invention.

Fig. 4 is a schematic perspective view of the electrode structure for an alternative emodiment of the invention.

Fig. 5 is a schematic cross-sectional view of a portion of a storage battery which operates in accordance with the teachings of this invention.

## DETAILED DESCRIPTION

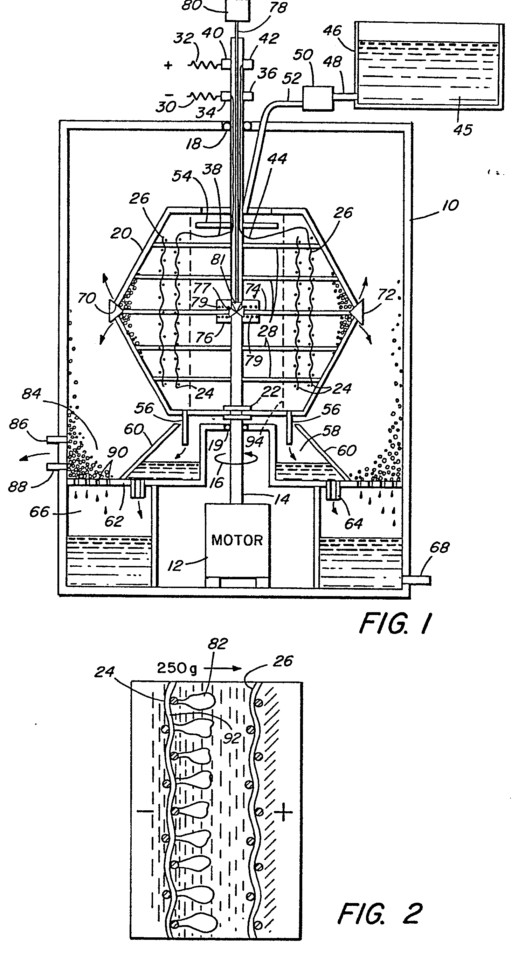

Referring to Fig. 1, apparatus for practicing the teachings of this invention includes a housing 10 which may be of metal, plastic or other suitable material. A motor 12, which is of conventional design and the control of which does not form part of the present invention, is mounted to the bottom of housing 10 at the center thereof and operates to rotate a shaft 14 which projects from the top thereof. While shaft 14 may be rotated in either direction, for purposes of this discussion, it will be assumed to rotate in the direction of arrow 16. Shaft 14 projects through the top of housing 10 and is journaled in the top of the housing 10 by bearing 18 and near motor 12 by bearing 19.

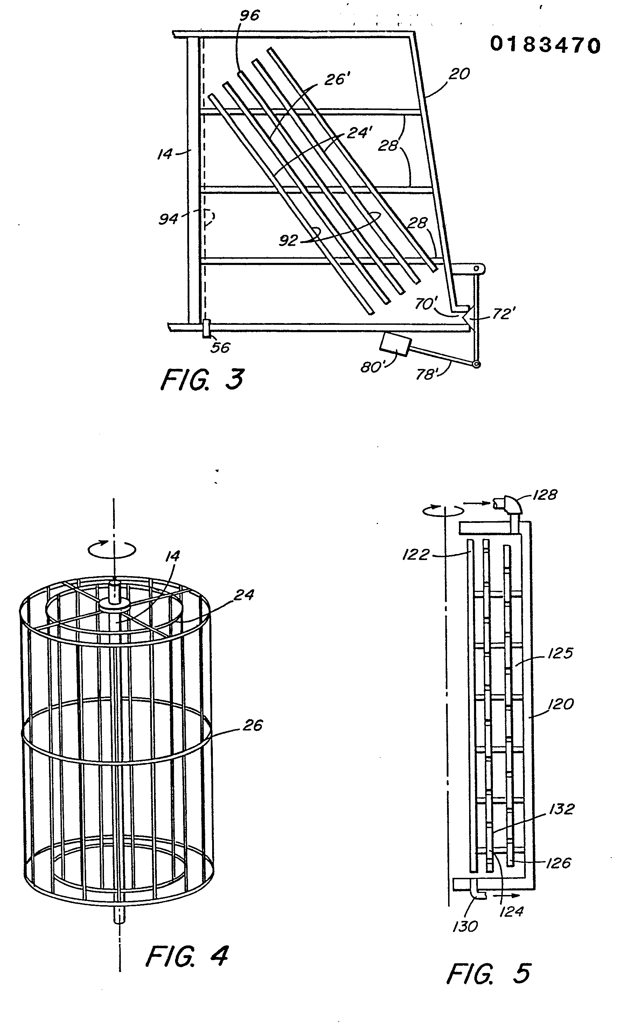

A cell 20 constructed of stainless steel or other material of suitable strength which would not be corroded by the electrolyte is attached to shaft 14 by a suitable mounting element 22 and rotates with shaft 14. Mounted in cell 20 are at least one cathode electrode 24 and at least one anode electrode 26. While a plurality of discreet pairs of-electrodes 24 and 26 may be mounted in cell 20, the electrodes are preferably in the form of concentric wire cylinders. The cylindrical electrodes may be wire nets or meshes as shown in Figs. 1 and 2, squirrel-cage configurations of parallel wires as illustrated in Fig. 4 or other suitable configurations. The electrodes are formed of a suitable conducting material such as stainless steel or nickel-plated copper. For a preferred embodiment of the invention, both electrodes are meshes of stainless steel wire, the wires being 0.3mm thick and being spaced from each other by 0.6mm. The electrodes are supported in cell 20 by separators 28 of plastic or other suitable non-conducting material, the separators being attached to shaft 14 and to the side walls of cell 20. The spacing between the electrodes is maintained by separators 28. The extent of this spacing will vary depending on the metal being separated and on the overall dimensions of the apparatus. For an embodiment where the metal being deposited was zinc, a spacing of 3mm between the electrodes was found to be suitable.

Electric current, from a suitable conventional source which does not form part of the present invention, is applied to wires 30 and 32. Negative current from wire 30 is applied through brush 34 to slip ring 36 on shaft 14 and through slip ring 36 to wire 38

5

which extends through shaft 14 and connects to cathode electrode
24. Similarly, positive current from wire 32 is applied through
brush 40 and slip ring 42 to wire 44 which extends through shaft
14 to anode electrode 26. The current applied to wires 30 and 32
will vary with the metal being separated and with other factors.
In a preferred embodiment with zinc being deposited, a current of
$117mA/cm^2$ was found to be suitable.

An electrolyte solution 45 containing the metal to be
deposited is stored in reservoir 46. The electrolyte flows,
either under the influence of gravity or by use of a suitable pump
(not shown), through tube 48, a suitable flow control device 50,
and tube 52 to rotating distribution plate 54 mounted in cell 20
on shaft 14. From plate 54, the electrolyte flows under the
influence of centrifugal force toward the side walls of chamber
20. Plate 54 assures a substantially uniform distribution of the
electrolyte solution around the periphery of cell 20. Electrolyte
solution 45 flows through cell 20 under the influence of gravity
with the heavier, metal-rich, solution being forced to the outer
wall of cell 20 by the centrifugal force resulting from the
rotation of the cell and the lighter metal-poor electrolyte solution
from which metal ions have been deposited being closest to the
center (i.e., rotation axis) of the cell. The metal-poor
electrolyte from the center of the cell is removed from the cell
through ports 56 and is collected in chamber 58 of housing 10.
Chamber 58 is bounded by wall 60 and by lower wall 62. From
chamber 58, the electrolyte flows through openings 64 in wall 62
to cylindrical chamber 66 formed in housing 10 and is removed from
the apparatus from this chamber through tube 68. If the desired amount of metal has been removed from the electrolyte solution 45, then the solution removed through tube 68 may flow to a suitable reservoir for reuse or disposal. If it is desired to remove additional metal from the solution, the electrolyte solution exiting through tube 68 may be pumped back into reservoir 46 for recycling. The electrolyte may also be pumped through a bed of ore or used in another industrial process before being recycled.

Cell 20 also has a plurality of openings 70 formed in its outer wall in the area thereof adjacent the widest portion of the cell. There are preferably four to six openings 70 evenly spaced around the periphery of cell 20. Each opening 70 is normally sealed by a conical plug 72 which is spring-biased in the closed position by a corresponding rod 74 which extends into a box 76 mounted on a shaft 14. In box 76 each rod terminates in a conical tip 77, a spring 79, positioned between tip 77 and the wall of box 76, performing the biasing function. A rod 78 activated by a solenoid 80 extends through the shaft 14 into box 76 and is provided with a conical top 71. When solenoid 80 is periodically activated from a suitable source of electric energy (in a conventional manner which does not form part of the present invention), rod 78 is lowered, causing tip 81 to be wedged between tips 77, pushing tips 77 and the rods 74 connected thereto outwardly, thereby moving plugs 72 outward to open opening 70. As will be discussed later, in accordance with the teachings of this invention, metal nodules 82 break off from the metal collecting face of cathode electrode 24 and, under the influence of the centrifugal force generated within cell 20, flow toward openings 70. Solenoid 80 is periodically pulsed to unplug openings 70 permitting metal nodules 82 adjacent thereto to be thrown into housing 10 where they are accumulated in area 84 of the housing. The metal nodules or granules may be continuously removed from housing 10 through opening 86 formed in the wall of the housing

7

and tube 88. To the extent any electrolyte solution 45 is thrown out through openings 70 with the metal nodules 82, such electrolyte solution passes through openings 90 in separator wall 62 to chamber 66.

In operation, the apparatus of Fig. 1 will initially be assumed to have no electrolyte 45 therein and it will be initially assumed that solenoid 80 is deactivated so that plugs 72 are sealing openings 70. The first steps in the operation are to apply energy to motor 12 to cause cell 20 to start rotating and to operate control 50 to cause electrolyte solution 45 to flow from reservoir 46 into cell 20. When electrolyte solution 45 has substantially covered electrodes 24 and 26, electric current may be applied to the electrodes through lines 30 and 32 and their related previously described, circuitry. The negative charge applied to electrode 24 and the positive charge applied to electrode 26 cause metal in the electrolyte solution to be separated from the solution and deposited on the outer, metal-collecting face 92 of cathode electrode 24. In accordance with the teachings of this invention, it has been found that when cell 20 is rotated at a rate sufficient to cause a substantial centrifugal force (in the order of several hundred times the force of gravity) to be applied in a direction away from metal collecting face 92, the metal is deposited as an array of substantially identical compact nodules of substantially uniform length. Fig. 2 is a pictoral representation of zinc nodules formed from a 37.6% potassium hydroxide-water solution having 6% zinc oxide dissolved therein. The dimensions of the electrodes in

8

this experiment are as previously stated and the centrifugal force
applied away from face 92 was 250 g. The nodule lengths (i.e.,
the thickness of the metal deposit) is roughly half the spacing
between the electrodes assuring there will not be a short
circuiting of the electrodes.

The shape of the nodules formed during deposition on face 92
depends primarily on the configuration of electrode 24 and of the
material from which this electrode is formed. If, for example,
the squirrel-cage arrangement of Fig. 4 is utilized instead of a
wire mesh, the metal nodules will be produced in the form of rods
or small sticks. Since different materials have different
physical and electrical properties, including adherence, the use
of a material other than stainless steel (the material used for
the electrodes with the nodules shown in Fig. 2) for electrode 24,
such as for example nickel-plated copper which has a higher conductivity and .
less surface adherence, will also cause the shape of the nodules
to vary.

When separation and deposition of metal is continued, the
nodules grow bigger until they reach a size, the length of which
is less than the distance between the electrodes, where the
centrifugal force breaks or tears them off metal collecting face
92. The openings in anode electrode 26 are selected to be large
enough so that the broken-off nodules may pass through this
electrode to the side wall of cell 20 in the area of openings 70.
Since solenoid 80 is initially not activated, the openings 70 are
plugged causing the metal nodules 82 to accumulate adjacent to
these openings. Because of their greater weight, the centrifugal

9

force causes the nodules 82 to fill the space in cell 20 in the area of opening 70. Electrolyte solution 45 is thus essentially kept out of this area. Solenoid 80 is periodically pulsed to remove plugs 72 from openings 70 to permit nodules 82 to be thrown from cell 20 into housing 10 and, in particular, into the area 84 thereof adjacent nodule removal opening 86. By deenergizing solenoid 80 and causing openings 70 to be replugged before all of the nodules 82 have been removed, the amount of electrolyte which escapes through openings 70 with the nodules during each nodule removal cycle can be minimized. To the extent any electrolyte does escape with the nodules, it passes through openings 90 into cylindrical chamber 66 for recycling or disposal. The nodules removed through tube 88 may be melted down for reuse or otherwise used for any desired purpose.

The electrolyte level or maximum thickness of electrolyte solution in cell 20 is indicated by dotted line 94 and is determined by the placement of electrolyte removal ports 56. Since, as has been previously indicated, the electrolyte solution containing the metal-ions is heavier than the metal-poor electrolyte solution from which metal has been deposited on face 92, the electrolyte flows under both the influence of the electric field and of centrifugal force from the outer periphery toward the center of cell 20, as well as flowing, under the influence of gravity, from the top of the cell to the bottom. Thus, the electrolyte removed through ports 56, which is the portion of the electrolyte closest to the axis of rotation of cell 20, is electrolyte from which most or all of the metal ions have been

10

removed (i.e., metal-poor electrolyte). The electrolyte leaving cell 20, through port 56 passes, through chamber 58, openings 64, in wall 62, chamber 66 and tube 68 to be either disposed of or recirculated to reservoir 46.

Since the nodules break off and are removed on a continuous basis, the apparatus shown in Fig. 1 may operate continuously for extended periods of time as long as fresh electrolyte solution containing the metal to be separated is supplied to reservoir 46. Thus, the new and unexpected results achieved by use of the teachings of this invention make possible a continuous mode of electrowinning and of electrodeposition which was not previously possible.

Fig. 3 is a schematic representation of an alternative embodiment for the cell 20 illustrating several modified features. First, instead of having a single concentric pair of anode-cathode electrodes, the embodiment of Fig. 3 has two pairs of such concentric electrodes (24', 26') which, for purposes of illustration, are ——————————————— of the squirrel cage configuration of Fig. 4 rather than the mesh configuration of Figs. 1 and 2. The two electrode pairs are separated by an insulating member 96 of plastic or other non-conducting material. The four electrodes and the insulating member are supported by non-conducting separators 28.

The electrodes of Fig. 3 also differ from those in Fig. 1 in that they are in the shape of truncated cones rather than cylinders. This configuration has been found advantageous in practicing the teachings of this invention in that the centrifugal

11

force directed at an angle to the metal-collecting faces 92 of the cathode electrodes is more effective in breaking off the metal nodules when the nodules reach the desired size. It is important, however, in order to achieve the nodule-forming capabilities of this invention, that the centrifugal force have a substantial component in a direction perpendicular to the metal collecting face of the cathode electrodes and away therefrom. An angle of approximately 45 degrees for the electrodes has been found to be a suitable angle.

With the configuration shown in Fig. 3, when the metal nodules 82 break off, they drift, under the influence of the centrifugal force, down the sloping electrodes and solid sloping insulating member 96 as well as drifting down the slanting side wall of cell 20, and ultimately accumulate adjacent openings 70' at the bottom of the side wall. Solenoid 80' is periodically pulsed to remove plugs 72' from openings 70' and permit the accumulated metal nodules 82 to escape in the manner previously described.

Referring now to Fig. 5, an embodiment of the invention is shown which is suitable for use as a rechargeable storage battery. Batteries to which this invention may be applied include zinc-nickle and zinc-air batteries, with the embodiment shown in Fig. 5 being, for purposes of illustration, a zinc-air battery. In Fig. 5, the cell housing 120 has mounted therein three concentric cylindrical electrodes, a positive air electrode 122, a zinc electrode 124 which is the battery cathode, and a positive charging electrode 126 which is used during recharging of the

12

battery. Electrolyte 125 is applied through tube 128 to cell 120, flows through the cell in the manner previously indicated, and is removed from the cell through tube 130. Tube 130 connects to tube 128 to recirculate the electrolyte during both charge and discharge to prevent the loss of the zinc from electrode 124 the zinc being deposited in the electrolyte during discharge of the battery. During charging of the battery, an electric current is applied, in the manner previously indicated, between electrodes 124 and 126 and the electrolyte solution having zinc ions deposited therein is recirculated through tubes 128 and 130 until substantially all of the zinc in the electrolyte solution has been deposited on metal collecting face 132 in the form of substantially uniform nodules of the type shown in Fig. 2. The quantity of zinc in the electrolyte and the charging time are not sufficient to permit the zinc nodules to reach a size which would cause them to break off. Any electrolyte which is lost through evaporation or otherwise may be replaced either manually or automatically at some point in the recirculation cycle of the electrolyte either prior to or during charge, discharge or both.

While the preferred embodiments described above have utilized zinc as the metal to be deposited from the electrolyte solution, it is apparent that the teachings of this invention could be utilized to separate and deposit most metals, including any metal which can be dissolved in an electrolyte solution as ions. Further, while several configurations for the electrodes have been shown and described, it is apparent that numerous other configurations are possible while still practicing the teachings

13

of this invention and that other materials, in addition to stainless steel and nickel-plated copper may be used for such electrodes. The applications to which the metal separation method and apparatus of this invention may be applied also are not limited to those

specifically disclosed.

- 1 -

0183470

## C L A I M S

1. A process for depositing a metal from a solution containing said metal onto a metal-collecting face of a cathode electrode, said cathode electrode and an anode electrode, mounted with a face substantially parallel to said metal collecting face, forming part of an electrochemical cell, comprising the steps of:

   providing said solution to said cell at least in the area thereof between said electrodes;

   applying a substantial centrifugal force to said metal—collecting face, said force having a substantial component in a direction perpendicular to and outward from the face; and

   applying an electric current to said electrodes.

2. A process as claimed in claim 1, wherein said solution is an electrolyte solution containing ions of the metal;

   wherein said cell is a rotatable cell;

   wherein said electrodes are mounted in said cell (a) with said faces substantially parallel to each other and spaced from each other by a predetermined distance, (b) oriented in said cell relative to the axis of rotation of the cell such that when the cell is rotated, the resulting centrifugal force applied to said electrode faces has a substantial component in a direction perpendicular to said faces and (c) with the cathode electrode closer to said axis of rotation than said anode electrode so that the perpendicular component of the centrifugal force applied to the metal-collecting face of said cathode electrode is in a direction away from said face; and

   including rotating said cell, and thus said electrodes and the electrolyte solution therebetween, about said axis of rotation, whereby said centrifugal force is generated.

CASE: 844,529

3.     A process according to claim 1 or 2, wherein said solution is provided to said cell so as to cause said electrolyte solution to continuously flow through said cell at a controllable rate, wherein the metal is deposited from said electrolyte onto said metal collecting face; and wherein, as a result of the centrifugal forces exerted on the electrolyte, the metal-poor electrolyte from which the metal ions have been removed is moved toward the rotation axis of said cell; and including removing the metal-poor, innermost electrolyte from the cell.

4.     A process according to any one of the preceding claims, wherein, as a result of the charge applied to said electrodes and of the centrifugal force applied thereto, metal is deposited from said electrolyte solution onto said metal collecting face in the form of nodules of a predetermined shape and of substantially uniform configuration.

5.     A process according to claim 4, wherein when said metal nodules reach a size which is less than the predetermined distance between said electrodes, they break off from said metal collecting face; and including removing the broken off nodules from said cell.

6.     A process according to any one of the preceding claims, wherein said electrodes are in the form of concentric truncated cones, the axis of each electrode being the axis of rotation of said cell.

7.     A process according to claim 6, wherein there are a plurality of pairs of said cathode and anode electrodes, each cathode-anode pair of electrodes being separated from the adjacent pair by a conical member of a non-conducting material.

8.     A process according to any one of the preceding claims, wherein said cell is part of a rechargeable battery;

      wherein said deposition of metal occurs during charging of said battery, said cathode electrode being the anode of the battery and said anode electrode being
a charging electrode; and

wherein the electrolyte solution is the battery
electrolyte in which ions of the metal of the battery
anode have dissolved during discharge of the battery.

9.	Apparatus for depositing a metal from an
electrolyte solution containing ions of the metal
comprising:

a cell rotatable about an axis;

at least one cathode electrode having a metal-
collecting face;

at least one anode electrode having an inner
face;

means for mounting said electrodes in said cell
with said metal-collecting face of said cathode and said
inner face of said anode substantially parallel to each
other and spaced by a predetermined distance, said
cathode being mounted closer to said cell axis then
said anode and said electrodes being oriented in the
cell such that, when said cell is rotated, the resulting
centrifugal force has a substantial component in a
direction perpendicular to said faces;

means for providing said electrolyte solutions
to said cell at least in the area between said electrodes;

means for rotating said cell about its axis,
said electrodes and electrolyte being rotated with said
cell; and means for applying an electric current to said
electrodes.

10.	A rechargable battery comprising:

at least one positive electrode having an
outer face;

at least one negative electrode, formed at least in part
of a metal having a metal-collecting face;

at least one charging electrode having an
inner face; a rotatable cell having an axis of rotation;

means for mounting said electrodes in said cell
in a manner such that (a) said positive electrode is closest to said axis of rotation, said charging electrode is
furthest    from said axis of rotation and said negative
electrode is positioned between said positive electrode and said
charging electrodes, (b) said faces are substantially
parallel to each other; (c) said positive electrode is
spaced from said negative electrode by a first predetermined
distance and said negative electrode is spaced from said
charging electrode by a second predetermined distance,
(d) said electrodes are oriented in said cell relative
to said axis of rotation such that, when the cell is
rotated, the resultant centrifugal force applied to the
electrode faces has a substantial component in a
direction perpendicular to said faces, and (e) said
metal-collecting face is facing said inner face whereby
the perpendicular component of the centrifugal force
applied to said metal-collecting face is in a direction
away from said face;

an electrolyte in said cell at least in the
area thereof between said electrodes, ions of the metal
of said metal electrode being dissolved into said
electrolyte during discharge of said battery and being
deposited from said electrolyte onto said metal-collecting
face during charging of said battery;

means for rotating said cell about its rotation
axis at least during charging of said battery, said
electrodes and electrolyte being rotated with said
cell; and

means for applying an electric current to said negative
——— electrode and said charging electrode during charging
of said battery.

0183470

FIG. I

FIG. 2

FIG. 3

0183470

FIG. 4

FIG. 5

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | GB-A- 801 397 (RHOANGLO MINE SERVICES LTD.)<br>* Page 1, lines 49-61; claims 1,5-7,9,11 * | 1,2,9 | C 25 C 7/00<br>H 01 M 10/42<br>C 25 D 17/00 |
| Y | | 8,10 | |
| X | US-A-4 028 199 (HOLLAND)<br>* Column 3, lines 18-35 * | 1,4,5 | |
| P,Y<br>D | US-A-4 521 497 (TAMMINEN)<br>* Column 5, lines 14-48; figures 1,2; claim 1 * | 8,10 | |
| A | US-A-3 827 962 (AHMAD)<br>* Claim 1 * | 1,2,9 | TECHNICAL FIELDS SEARCHED (Int Cl 4) |
| A | US-A-3 822 149 (HALE) | | C 25 C<br>C 25 D<br>H 01 M |

The present search report has been drawn up for all claims

| Place of search | Date of completion of the search | Examiner |
|---|---|---|
| THE HAGUE | 20-02-1986 | COOK S.D. |

EPO Form 1503 03 82